Europäisches Patentamt

European Patent Office

Office européen des brevets

(11) Publication number: **0 233 407**
**A2**

## (12) EUROPEAN PATENT APPLICATION

(21) Application number: **86309655.8**

(22) Date of filing: **11.12.86**

(51) Int. Cl.⁴: **G11B 5/54** , G11B 21/02

(30) Priority: **18.02.86 US 830146**

(43) Date of publication of application:
**26.08.87 Bulletin 87/35**

(84) Designated Contracting States:
**DE FR GB NL**

(71) Applicant: **MAGNETIC PERIPHERALS INC.**
**8100-34th Avenue South**
**Minneapolis Minnesota 55440(US)**

(72) Inventor: **Gitzendanner, Louis George**
**4949 N.W. 31 Terrace**
**Oklahoma City Oklahoma 73122(US)**

(74) Representative: **Caro, William Egerton et al**
**J. MILLER & CO. Lincoln House 296-302 High**
**Holborn**
**London WC1V 7JH(GB)**

(54) **A device for urging an output arm member in incremental rotary steps and an information storage device provided therewith.**

(57) A device for urging an output arm member (12) in incremental rotary steps comprises a housing - (11), a stepper motor (14) for driving a shaft (15), a first engagement member (1) having first engagement teeth of one angular size and a second engagement member (2) having second engagement teeth for detachable engagement with the first engagement teeth, the second engagement member being connected to the housing. A third engagement member (3) has third engagement teeth and is connected with the first engagement member such that the first and third engagement members move together. The third engagement teeth have a smaller or larger angular size than the angular size of the first engagement teeth. A fourth engagement member (4) is connected with the arm member (12) and has fourth engagement teeth for detachable engagement to the third engagement teeth. The fourth engagement member is engaged through reduction gearing so arranged and disposed to translate incremental rotation of the shaft (15) to increments substantially equal to the difference between the angular sizes of the first and second engagement teeth to the shaft. The arrangement is such that this engagement of the first and third engagement members from the second and fourth engagement members, respectively, allows the first and third engagement members to move in a rotary direction responsive to the shaft and re-engagement of the first and second engagement members to the third and fourth engagement members, respectively, produces realignment of the third and fourth engagement teeth to an accuracy of the same order of magnitude as is the difference between the angular sizes of the first and second engagement teeth.

*FIG. 1*

# A DEVICE FOR URGING AN OUTPUT ARM MEMBER IN INCREMENTAL ROTARY STEPS AND AN INFORMATION STORAGE DEVICE PROVIDED THEREWITH

This invention relates to devices for urging output arm members in incremental rotary steps and to information storage devices provided therewith.

In disk drives, particularly those employing "floppy" disk media, positioning of read/write elements is often accomplished by actuation in preset steps rather than through feedback driven servo control mechanisms. High information track density in such disk drives can only be realised through consistently repeatable and accurate stepping such as is achievable with a device according to the present invention. The present invention may also find applicability in other apparatus which requires accurate, small incremental movements.

U.S. Patent Specification No. 3,881,189 produces accurate angular steps, which are convertible to accurate linear steps using a band drive arrangement. Accurate rotary positioning may be translated by direct mechanical linkage, e.g. the band drive arrangement of this U.S. Patent into linear steps.

According to one aspect of the present invention there is provided a device for urging an output arm member in incremental rotary steps characterised by comprising: housing means; a stepper motor means for driving a shaft, a first engagement member having first engagement means of one angular size; a second engagement member having second engagement means for detachable engagement with said first engagement means, said second engagement means being connected to said housing means; a third engagement member having third engagement means and connected with said first engagement member such that said first and third engagement members move together so that rotary movement of said first and third engagement members is directly linked to movement of said shaft, said third engagement means having a smaller or larger angular size than the angular size of said first engagement means; and a fourth engagement member connected with said arm member and having fourth engagement means for detachable engagement to said third engagement means, said fourth engagement member being engaged through reduction gearing so arranged and disposed to translate incremental rotation of said shaft to increments substantially equal to the difference between the angular sizes of said first and second engagement means to said shaft, the arrangement being such that, in operation, disengagement of said first and third engagement members from said second and fourth engagement members, respectively, allows said first and third engagement members to move in a rotary direction responsive to said shaft and re-engagement of said first and second engagement members to said third and fourth engagement members respectively, produces realignment of said third and fourth engagement means to an accuracy of the same order of magnitude as is the difference between the angular sizes of said first and second engagement means.

In the preferred embodiment one of said engagement means is in the form of at least one protrusion and the corresponding mating engagement means comprises a multiple of equally spaced mateable detents.

In one embodiment the device includes a second stepper motor means and second reduction gearing engaging with said fourth engagement member to provide larger incremental stepping movement to said fourth engagement member than said first stepper motor means to provide for faster rotary movement of said arm member.

According to a further aspect of the present invention there is provided an information storage device having: a disk shaped record carrier whereon information is arranged in substantially concentric tracks; read/write means moveable radially across said tracks to read or modify information on radially different tracks; and a device according to the present invention for imparting radial motion to said read/write means.

Mechanical linkage means may be provided between said read/write means and said arm member.

The invention is illustrated, merely by way of example, in the accompanying drawings, in which:-

Figure 1 is a top view of one embodiment of a device according to the present invention for urging an output arm member in incremental rotary steps;

Figure 2 is a cross-section side view of the device of Figure 1 taken on the line 2-2;

Figure 3 is a cross-sectional top view of the device of Figure 1 taken on the line 3-3 in Figure 2;

Figure 4 is a cross-sectional top view of the device of Figure 1 taken on the line 4-4 in Figure 2;

Figure 5 is a cross-sectional top view of the device of Figure 1 taken on the line 5-5 in Figure 2; and

Figure 6 is a cross-sectional view of a secod embodiment of a device according to the present invention for urging an output arm member in incremental rotary steps.

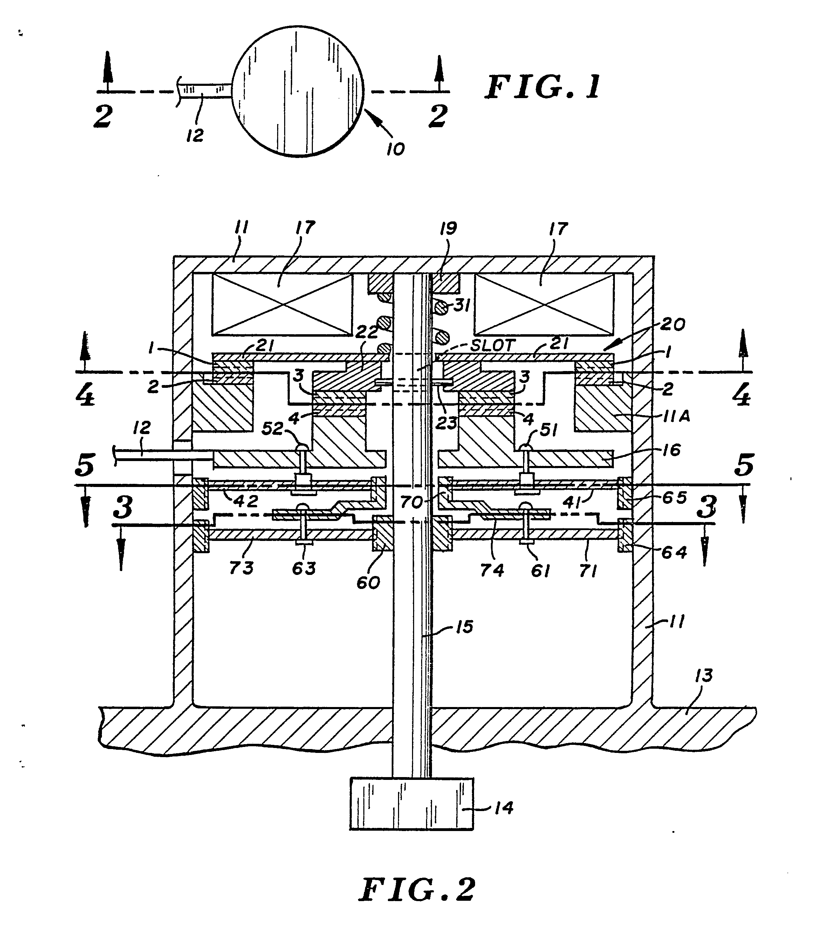

In Figure 1, an arm member 12 is seen to protrude from a housing 11 of a device 10 according to the present invention for urging the arm member in incremental rotary steps.

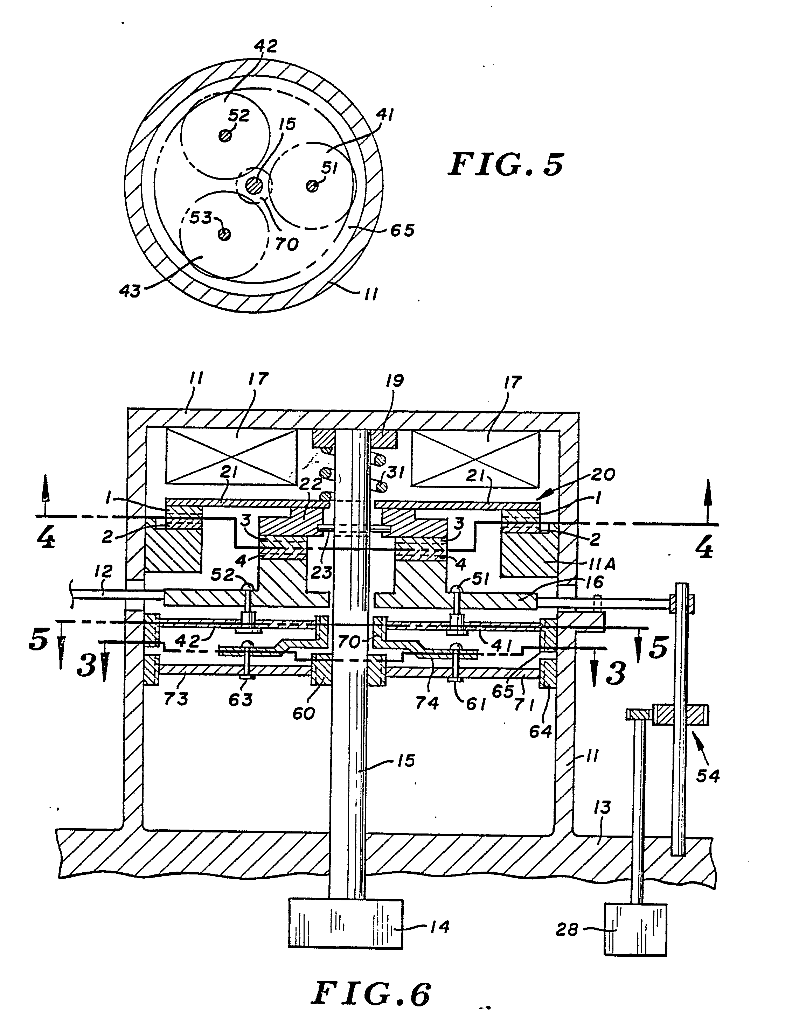

Referring to Figure 2, the entire housing 11 is integrally connected to a base structure 13. Any form of housing will suffice so long as it supports a shaft 15, an electromagnetic solenoid 17 and keeps a support 11A immovable relative to the shaft 15. For the second embodiment of the present invention shown in Figure 6, the housing must also be able to admit reduction gearing.

Coarse position of the arm member 12 is generally accomplished by rotation of a stepper motor 14 turning a shaft 15 whose motion is reduced by reduction gearing and transferred from the reduction gearing through connection pins 51,52,53 - (Figure 5) to a disk member 16 to which the arm member 12 is solidly attached.

Coarse positioning cannot occur unless the solenoid 17 has first pulled "up" on a diaphragm 21. This lifts a toothed face clutch member 1, the diaphragm 21, a ring 19, and a toothed face clutch member 3 at the same time, as a unitary assembly 20. Thus, when the solenoid 17 is activated, the engagement between the cluth member 1 and a toothed stationary face clutch member 2 is released, as is the engagement between the clutch member 3 and a toothed face clutch member 4.

When coarse positioning is achieved, the solenoid 17 releases a diaphragm 21 and allows the assembly 20 to be forced downward by a spring 31, causing re-engagement of the two pairs of clutch members, thereby accurately positioning the arm member 12 through its connection with the disk member 16. The four clutch members 1,2,3,4 are precision made with reference to their concentricity and uniformity of tooth spacing. The ring 19 is formed to allow rotation of the shaft 15 and to hold the spring member 31 in position.

The use of concentric clutch members is the most practical arrangement but other arrangements are possible. For instance, a small number of teeth, detents, protrusions or engaging members could be substituted for the clutch member 2, or the clutch member 1 (or for 3 or 4) but not for both of either pair of clutch members. In any case it is clear that numerous like combinations can have substantially the same effect as that achieved using entire rings of teeth, but use of entire rings of teeth for each member is preferred.

Likewise, the arrangement of the reduction gearing herein, or the particular form of reduction gearing shown is not essential and any other convenient arrangement producing similar gear reduction is possible. Any system of reduction gearing yielding a one tenth degree least significant figure accuracy should function adequately for the range of movement required.

The device of Figure 2 requires that there be slightly more (or slightly less) teeth on the pair of clutch members 3,4 than the number of teeth on the pair of clutch members 1,2. It is also required that the clutch members 1,3 move (when engaged) in a solid angular connection with each other, and that both disengage from the clutch members 2,4 at nearly the same time. It is desirable that when the solenoid 17 is de-energised to release the diaphragm 21, the clutch members 1,2 are fully engaged slightly before the clutch members 3,4 engage fully.

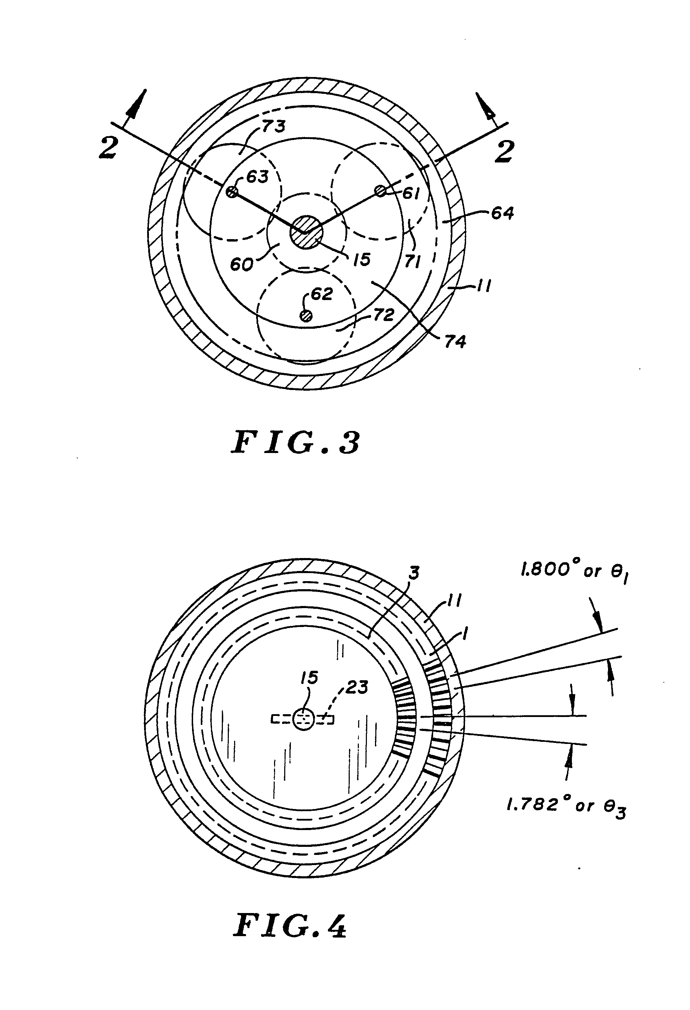

The steps by which consistently repeatable accurate discrete angular rotation is accomplished with the device of Figures 1 to 5 is as follows. Assuming, for the purpose of illustration, a step angle of the stepper motor 14 of 1.8° per step, the clutch members 1,2 should have 200 teeth each, making 200 possible engagement positions 1.800° apart (the two extra significant figures reflecting the accuracy of the teeth's spatial relationship). The clutch members 3,4 then will have more (or less) than 200 teeth and in this example, 202 teeth. - (More than 202 teeth will yield a larger movement of the disk member 16).

In a first step assuming a single rotational increment is desired, the solenoid 17 disengages the assembly 20 from the clutch members 2,4. In the next step, the stepper motor 14 rotates the assembly 20 clockwise by its engagement with the shaft 15 through a pin 23 one step, or 1.8°. At the same time, rotation of the shaft 15 also forces the reduction gearing to move a disk member 16 (by connection pin 51) on an attachment member 22 clockwise approximately 0.018°.

Note that the angular spacing between teeth of the clutch members 3,4, having 202 teeth, is 1.782°. Thus, when the clutch member 1 is forced downwardly, the clutch member 4 is forced to move clockwise 0.018° to align with the clutch member 3 (1.800° -1. 782°). The reduction gearing is non-precise (that is, it is made with sufficient backlash -also referred to as clearance -to allow for any discrepancy between its approximately generated 0.018° and the precision 0.018° movement which the clutch member 4 is forced to make on re-engagement). The assembly 20 is forced downwardly by the spring 31 when the solenoid 17 releases the diaphragm 21, thus holding the clutch member 3 (and thus by its engagement to the clutch member 4, and the arm member 12) in a firm angular position, 0.018° further in a clockwise direction. Motion in the opposite direction could be achieved using 198 teeth for the clutch members 3,4.

An angular step of 0.018° will allow for a 960 tracks per inch configuration on a 13.34 cm (5.25 inch) disk with the arm member 12 being 8.9 cm - (3.5 inch) long from pivot to a transducing head - (not shown).

Note that in the arrangement described, it is desirable that the clutch members 1,2 engage first, followed by the clutch members 3,4 to ensure that the clutch member 1 positions accurately relative to the clutch member 2 prior to the clutch member 4 positioning itself accurately relative to the clutch member 3. This will minimise the residual position error due to unavoidable friction and elasticity of the parts.

The reduction gearing may be any one of a number of arrangements including the example illustrated in Figures 2, 3 and 5. Illustrated is a two-stage planetary gear reduction system having a 101:1 ratio with the input shaft 15 being driven by the stepper motor 14. The output element is the disk member 16. The disk member 16 is attached by the pins 51,52,53. Two sun gears or pinions 60,70 each have 10 teeth, and ring gears 64,65 have 90 and 91 teeth respectively. Another form of reduction gearing could employ a four-gear spur gear system having, for example, two toothed drive gears of ten teeth each, a 100 tooth driven gear and a 101 tooth driven gear. It is merely required that the reduction gearing brings the clutch member 4 to within the engagement range of the clutch member 3 and that there must be enough looseness or play in the prepositioning of the reduction gearing so as not to restrict the clutch members from moving the disk member 16 and the arm member 12 to the correct final position.

To move two steps, the stepper motor 14 and the shaft 15 would be stepped through two steps, or 3.6°. Upon re-engagement of the diaphragm 21 with the clutch members 2,4, the arm member 12 would have rotated 0.036°. In the event the number of steps desired is large, however, as for example 800 steps, the stepper motor is commanded to move the requisite number of steps while the clutch members are disengaged.

A second embodiment of a device according to the present invention is shown in Figure 6. Like parts in Figures 1 to 6 have been designated by the same reference numerals. In this embodiment, to move any given number of steps, the stepper motor 14, which drives the shaft 15 and the clutch member 1, is commanded such that:

$$N = S - 1 (X),$$

where S = the number of steps desired,

I is that integer which results in the smallest absolute value for N, and

X is 200 being the number of teeth of the pair of clutch members 1,2.

Thus for S = 800 steps, and I = 4; N = 0, meaning that the stepper motor 14 would not be stepped at all. Note that if 799 steps clockwise were required, the stepper motor 14 could rotate the assembly 20 to the required position by making one step counterclockwise (i.e. S = 799, I = 4, and N = -1). The device shown in Figure 6 employs a second stepper motor 28 to effect larger movements of the disk member 16. The stepper motor 28 is stepped that number of steps required to bring the disk member 16 within less than a half tooth (of both pairs of clutch members) of the desired final accurate position. The second stepper motor 28 is connected to the disk member 16 by reduction gearing 54 designed to rotate the disk member 16 approximately 0.57° per step of the stepper motor 28. This allows coarse or approximate prepositioning of the disk member 16 within less than ± 0.3° which is substantially less than ± 0.89° (about 1/2 of 1.80° or ± 1/2 tooth). This allows ample room for hysteresis in prepositioning, tooth shape, and other allowances that may be needed. The suggested 0.57° steps are approximately equal to 32 gear reduced steps of the stepper motor 14, which makes for simple logic to determine when to step the stepper motor 28. That is, for every 32 steps which would be required for the stepper motor 14, only one step of the stepper motor 28 is required. Thus an 800 step (or track) leap requires twenty-five steps of the stepper motor 28 and none of the stepper motor 14. Likewise a 799 track leap would require an anticlockwise step of the stepper motor 14 and 25 clockwise steps of the stepper motor 28.

It will be apparent that any reduction gearing 54/stepper motor 28 combination that would yield a 0.57° step approximation as described could be used. Likewise, it will be clear that any number of teeth or gear ratios could be employed so long as a slightly different number of "teeth" are used for one pair of clutch members than for the other.

## Claims

1. A device for urging an output arm member - (12) in incremental rotary steps characterised by comprising: housing means (11); a stepper motor means (14) for driving a shaft (15); a first engagement member (1) having first engagement means of one angular size; a second engagement member (2) having second engagement means for detachable engagement with said first engagement means, said second engagement means being connected to said housing means (11); a third engagement member (3) having third engagement means and connected with said first engagement member such that said first and third engagement members move together so that rotary movement of said first and third engagemement members is directly linked to movement of said shaft (15), said third engagement means having a smaller or larger angular size than the angular size of said first engagement means; and a fourth engagement member (4) connected with said arm member (12) and having fourth engagement means for detachable engagement to said third engagement means, said fourth engagement member being engaged through reduction gearing so arranged and disposed to translate incremental rotation of said shaft (15) to increments substantially equal to the difference between the angular sizes of said first and second engagement means to said shaft, the arrangement being such that, in operation, disengagement of said first and third engagement members from said second and fourth engagement members, respectively, allows said first and third engagement members to move in a rotary direction responsive to said shaft and re-engagement of said first and second engagement members to said third and fourth engagement members respectively, produces realignment of said third and fourth engagement means to an accuracy of the same order of magnitude as is the difference between the angular sizes of said first and second engagement means.

2. A device as claimed in claim 1 characterised in that one of said engagement means is in the form of at least one protrusion and the corresponding mating engagement means comprises a multiple of equally spaced mateable detents.

3. A device as claimed in claim 1 or 2 characterised by including a second stepper motor means (28) and second reduction gearing (57) engaging with said fourth engagement member to provide larger incremental stepping movement to said fourth engagement member than said first stepper motor means to provide for faster rotary movement of said arm member.

4. An information storage device having: a disk shaped record carrier (16) whereon information is arranged in substantially concentric tracks; and read/write means moveable radially across said tracks to read or modify information on radially different tracks, characterised by a device as claimed in any preceding claim for imparting radial motion to said read/write means.

5. A device as claimed in claim 4 characterised by mechanical linkage means between said read/write means and said arm member (12).

FIG. 1

FIG. 2

**FIG.3**

**FIG.4**

1.800° or $\theta_1$

1.782° or $\theta_3$

*FIG. 5*

*FIG.6*